# EUROPEAN PATENT APPLICATION

(11) **EP 1 111 525 A2**
(43) Date of publication of application: **27.06.2001**
(21) Application number: 00302221.7
(22) Date of filing: 17.03.2000
(51) Int. Cl.: G06F 17/60

(54) **A method of guaranteeing the quality of a product with biotechnology and a method of delivering gene information**

(30) Priority: 20.12.1999 JP 36035099
(71) Applicant: Hitachi, Ltd., Chiyoda-ku, Tokyo 101-8010 (JP)
(72) Inventor: Ihara, Sigeo, Tokorozawa-shi, Saitama 359-0003 (JP); Kanae, Hiroki, Fujisawa-shi, Kanagawa 251-0015 (JP)
(74) Representative: Nicholls, Michael John

(57) **Abstract**

The specification discloses a method of delivering a variety of bio-product information including the quality guarantee of the bio-product. An information center stores information concerning the code of the bio-product, bio-product information, biological information concerning a user of the bio-product, etc., and processes the stored information in such a manner that the user can efficiently and easily obtain updated information, before delivering to the user from databases according to his request.

## Description

### BACKGROUND OF THE INVENTION

### 1. Field of the Invention

The present invention pertains to methods of delivering information related to bio-products and information related to the quality guarantee of the bio-products to users.

### 2. Description of the Related Art

Conventionally, when bio-products including medicines and reagents are provided to users, information related to the bio-products and the quality-guarantee thereof supplied with the bio-products are information obtained at the time of manufacturing the bio-products, whether supplied in hard copies or storage media. In other words, when a medicine expected to be effective to patients with a specific disease is designed, manufactured, and provided at a certain point in time, the latest information about the efficacy and side effects of the medicine is equivalent to information obtained at the time of designing and manufacturing the medicine, or else, information obtained when the medicine is provided to users.

Under circumstances in which biological information represented by genome information and information concerning substances from which organisms are originated, such as proteins, are rapidly expanding, organism-related information including the biological information and the information concerning organic origins are supplemented by new information and are changed to update existing information. When bio-products designed and produced based on organism-related information are provided to users, both the completed bio-products and the organism-related information used as reference at the time of designing the products are provided to the users. Since the information that is provided to the users at this time is the organism-related information referred to when the products were designed. Thus, the users cannot know about new information elucidated after purchasing the bio-products with the information concerning the products.

For example, in terms of medicines, even though the medicines were designed by making the most of information newest at the time of developing, with further research afterward, such medicines may be found to be effective to other diseases or may be found not to work for patients with a particular predisposition.

### SUMMARY OF THE INVENTION

Accordingly, it is an object of the present invention to provide a method of delivering the latest information concerning the effects, efficacy, and safety of bio-products, by giving additional information to organism-related information or changing parts thereof as time elapses, even after providing the bio-products with the organism-related information to users. In addition to this, it is another object of the invention to provide a method of guaranteeing the safety level of bio-products based on the past research standard and information. In other words, since information concerning the bio-products is being updated momentarily such as when designed, manufactured, provided, and used, it is significant, at any stage, to provide a method of letting the users of the bio-products knowing about the guaranteed quality-level of the products and to provide information used as criteria necessary when the users evaluate the products. In view of the above situation, the present invention aims at providing the method of delivering the information concerning bio-products and the quality guarantee thereof, as described above.

Furthermore, it is necessary both for the users of the bio-products and the manufacturers thereof to obtain the bio-product-related information. Today, with major research projects such as genome analyses proceeding, the amount of DNA base sequence information regarding various organisms including humans is momentarily and greatly increasing. The analyzed DNA base sequence information is stored in a database. As a result, research regarding base sequence information as represented by genome science and molecular biology is also proceeding, which contributes to an expansion of a variety of organism-related information such as gene-related information, protein-related information, and information concerning SNP(single nucleotide polymorphism). The ratio of the expansion of the organism-related information is yearly rising.

In such circumstances, not only bio-product information but also information concerning animals and objects as targets to be used, and users are updated. Accordingly, for example, when a medicine is given under a certain condition, even if it was not expected the medicine to cause side effects a couple of days ago, with database search performed at the present moment in time, the medicine may be found to have a high possibility for causing side effects. Particularly, when an individual-oriented medication is given according to the SNP of each individual person, in other words, according to the individual predisposition, prescribed medicines vary with the person. In addition, the personal information about the safety, effects, conditions for medication needs to be individually controlled.

Accordingly, another object of the present invention is to provide a unit for obtaining information concerning a bio-product and a method thereof based on information related to at least one of an individual user and an object to be used, when the bio-product is used.

More specifically, for example, in terms of the sale of a primer as a bio-product, as seen in conventional cases, when only the primer and information concerning the alignment of the primer are provided to a user, the user himself needs to examine information related to the primer and an exon (a partial alignment) amplified by the primer by using various tools offered on the Web sites such as commercially available gene-analysis tools and the tools of the NCBI site, or by accessing public databases such as Genbank and PubMed for comparison. Additionally, for example, in a case of the search of a homologous gene and the gene-related document information, it is impossible to obtain related information by using independent tools and databases. In such a case, the user needs to find the appropriate combination of a tool and a database, and make adjustments such that the tool can be connected to the database. Accordingly, the present invention secondly aims at providing an information delivery system in which data regarding primers stored at primarily different places in different forms is easily accessible and can be easily delivered to a person who needs the data. Naturally, delivered information may include not only primer information, but also information concerning the SNIPs.

To this end, in the present invention, an information storage medium recording the list of databases to be referred to for obtaining information concerning bio-products is installed in a terminal. The terminal reads out to pick up a database to be used for the information reference, by which information concerning the bio-products and the users thereof is provided from the database via a network.

Therefore, the invention provides a system for delivering information concerning bio-products, which comprises a bio-product package containing a bio-product and a storage medium recording information concerning an information-reference database for the bio-product, a terminal for reading out an information-reference database from the storage media, an information center connected to a network to permit access from the terminal, and a database connected to the network.

### BRIEF DESCRIPTION OF THE DRAWINGS

Fig. 1 is a view illustrating the structure of a system for delivering information concerning a bio-product;
Fig. 2 is a view illustrating the structure of a system having a database storing a history archive;
Fig. 3 is a chart illustrating the process of obtaining the latest information concerning the safety of a medicine;
Fig. 4 is an example of data arrangement;
Fig. 5 is an illustration of a primer set;
Fig. 6 is a view illustrating the structure of a system having databases managed by a center;
Fig. 7 is a chart illustrating the process of obtaining the latest information concerning the primer set;
Fig. 8 is an example of a terminal;
Fig. 9 is an example of a conventional gene analysis method; and
Fig. 10 is an illustration about how a purchaser of the primer set can obtain information concerning the product.

### DESCRIPTION OF THE PREFERRED EMBODIMENTS

First, a description will be given of reference numerals used in the embodiments of the present invention.

Reference numeral 101 denotes a terminal; reference numeral 102 denotes a card read/write unit; reference numeral 103 denotes a card; reference numeral 104 denotes an information center; reference numeral 105 denotes databases; reference numeral 106 denotes a network; reference numeral 107 denotes a biomedicine database; reference numeral 108 denotes a genome sequence database; reference numeral 109 denotes a protein database; reference numeral 110 denotes a signal-transmission line database; reference numeral 111 denotes a clinical database; reference numeral 112 denotes an electronic medical-record database; reference numeral 113 denotes other genome database; reference numeral 114 denotes a food database; reference numeral 115 denotes a medicine database; reference numeral 116 denotes a personal pedigree database; reference numeral 117 denotes a family register database; reference numeral 118 denotes a line; reference numeral 201 denotes another terminal; reference numeral 202 denotes another network; reference numeral 203 denotes a document database; reference numeral 204 denotes a fire wall; reference numeral 205 denotes another network; reference numeral 206 denotes a history archive; reference numeral 207 denotes a gene database; reference numeral 208 denotes another clinical database; reference numeral 209 denotes another medicine database; reference numeral 210 denotes an SNPs database; reference numeral 211 denotes a medicinal-effectiveness statistics database ; reference numeral 301 denotes a step of obtaining a medicine ID; reference numeral 302 denotes a step of obtaining the date of manufacture; reference numeral 303 denotes a step of obtaining a chemical formula/molecular structure; reference numeral 304 denotes a step of obtaining ligand/protein information; reference numeral 305 denotes a step of obtaining exon structure information; reference numeral 306 denotes a step of obtaining gene product information; reference numeral 307 denotes a step of obtaining DNA sequence information; reference numeral 308 denotes a step of obtaining related DNA accession number information; reference numeral 309 denotes a step of obtaining the latest information of medicinal safety; reference numeral 310 denotes a step of outputting information for medicinal safety; reference numeral 311 denotes a database environment in 199Y; reference numeral 312 denotes a database environment in 200X; reference numeral 313 denotes a cross check between data in 199Y and 200X; reference numeral 401 denotes a bio-product ID; reference numeral 402 denotes organism information; reference numeral 403 denotes organ information; reference numeral 404 denotes gene information; reference numeral 405 denotes sequence information; reference numeral 406 denotes other annotations (ex. protein); reference numeral 501 denotes plates; reference numeral 502 denotes a container; reference numeral 503 denotes information described on paper; reference numeral 504 denotes an information storage medium; reference numeral 505 denotes an ID code; reference numeral 601 denotes another terminal; reference numeral 602 denotes another network; reference numeral 603 denotes a center; reference numerals 604 to 606 denotes databases; reference numeral 607 denotes a database of limited access by the center; reference numeral 608 denotes another database of limited access by the center; reference numeral 609 denotes a database of user information; reference numeral 701 denotes a step of obtaining a primer ID code; reference numeral 702 denotes a step of obtaining the date of manufacture; reference numeral 703 denotes a step of obtaining primer sequence information; reference numeral 704 denotes a step of obtaining exon information; reference numeral 705 denotes a step of obtaining the latest annotation of the primer sequence; reference numeral 706 denotes a step of outputting archive information; reference numeral 707 denotes cross check between data in 199Y and data in 200X; reference numeral 800 denotes a portable wireless terminal; reference numeral 801 denotes an information requirement receiving unit; reference numeral 802 denotes a memory; reference numeral 803 denotes a control unit; reference numeral 804 denotes an interface; and reference numeral 805 denotes a display.

As a first embodiment of the present invention, a description will be given of a method of delivering information concerning bio-products and the quality of the products including the quality guarantee thereof after the delivery of the bio-products to customers. In this case, the bio-products include a variety of products such as medicines, reagents, chemicals, substances from which organisms are originated, artificial skins and organs, foods, genetically-altered foods, agricultural chemicals, bacteria, microbes, vectors, primers. Among these bio-products, there are some products designed based on organism information and organic-origin information represented by DNA nucleotide sequence information, protein amino acid sequence information, etc. Besides the above information, the organism-related information including the organism information and the organic-origin information comprehensively includes diagnosis information, food-related information, and the concepts of different tations related to organisms and organic origins. For example, there are included information concerning heart pulsation such as heart beat and pulse, blood-pressure value information, information concerning organs such as the liver and the kidneys, information concerning brain waves and responses to brain stimuli, information concerning urinary components, information concerning the amount and quality of blood components, information concerning the responses and sedimentation of the blood components against chemicals, information concerning pupillary reflex, information concerning skin color and perspiration, information concerning organic responses against photic, acoustic, chemical, and psychological stimuli, information concerning the colors and sores of laryngeal mucosa and nasal mucosa, information concerning cellular tissues such as hyperplasia, cell death, and degeneration, information concerning genetic recombination in gene-altered foods, and information concerning the safety of gene-altered foods. The annotation implies information useful to learn about the characteristics, amounts, conditions, and origins of bio-substances including organisms or organic parts, and substances from which organisms are originated, and information useful to learn about responses and interactions between multiple species of bio-substances.

Furthermore, even in cases of bio-products produced from organisms and substances originally existing in nature and artificial bio-products produced without using the aforementioned organic-origin information, it is possible to explain how the bio-products work, whether they are effective or not, and how much they are effective by referring to the organic-origin information. For example, galenicals such as herb medicines are substances existing in nature, which are not artificially designed and produced based on human-DNA information. Nevertheless, referring to the difference between the pieces of information concerning individual DNAs, it seems possible to explain individual differences in medicinal effects between people who take a herb medicine, such as whether the herb medicine is effective or not to each individual person. Accordingly, the effects of bio-products can be explained by producing bio-products based on organic-origin information, or else by referring to the information of a target organism to be used and the organic-origin information thereof. Thus, in terms of the use of bio-products, it is essential and beneficial to obtain organism information and organic-origin information concerning the bio-products.

Similarly, when bio-products are provided, the provision of organic-origin information, information derived therefrom and information related thereto will be increasingly significant in the future. This is because, with the progress in the studies of decoding DNA base sequence information and the studies of genes, bio-products can be produced in linkages with organism information and organic-origin information obtained as the results of those studies.

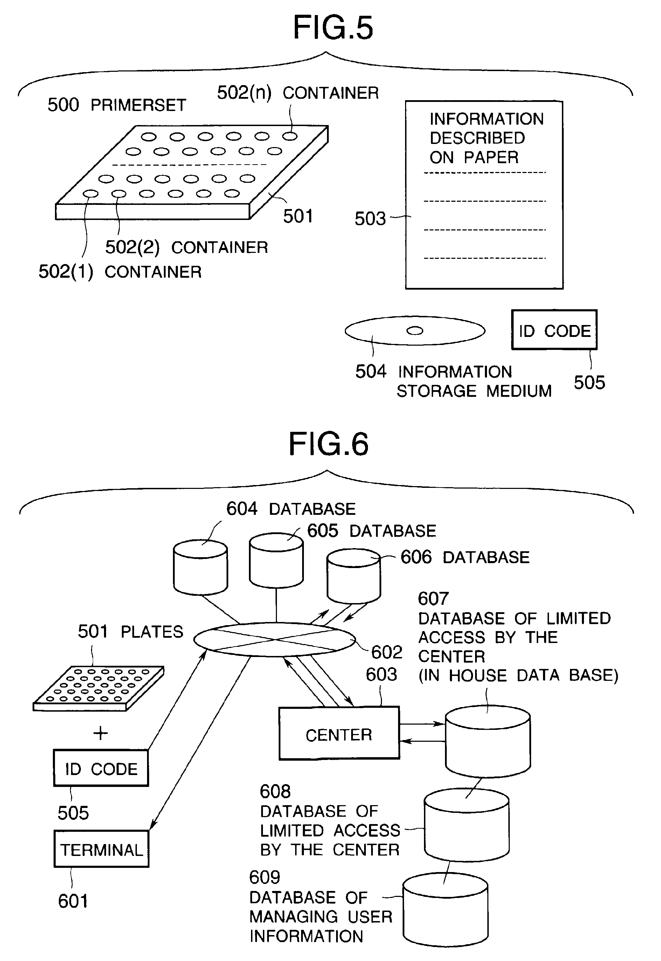

As an example of bio-products, Fig. 5 shows a form for providing a primer product of reagents used in the PCR amplification method. A primer set 500 is a bio-product in which a plurality of kinds of primers is contained in the n-pieces of containers 502(1) to 502(n) disposed on a plate 501. Usually, a primer set is a bio-product used for performing PCR amplification when a large scale of automatic gene analysis is conducted, and it is a primer-providing form suitable to mechanical processing. Since a primer is a reagent used for amplifying a DNA, it is necessary to inform a user which DNA is amplified by the primer. In other words, the information of a DNA as a target for amplification must be offered to the user. As a result, since an information storage medium must be necessarily provided with the primer set, information described on paper 503, a storage medium 504 for recording information, a card 505 for recording or describing an ID code used for information reference, etc., are provided with the primer set. That is, in Fig. 5, a product having the form of a bio-product package including (1) the primer set and the storage medium, (2) the primer set and the ID code, or the like, is provided to the user. In a case of the combination package of the primer set and the information described on paper 503, a method of describing a data address for information reference, such as a URL, seems to be used. However, it is extremely difficult to provide information only by using the information described on paper 503 without referring to information other than the information described on paper 503.

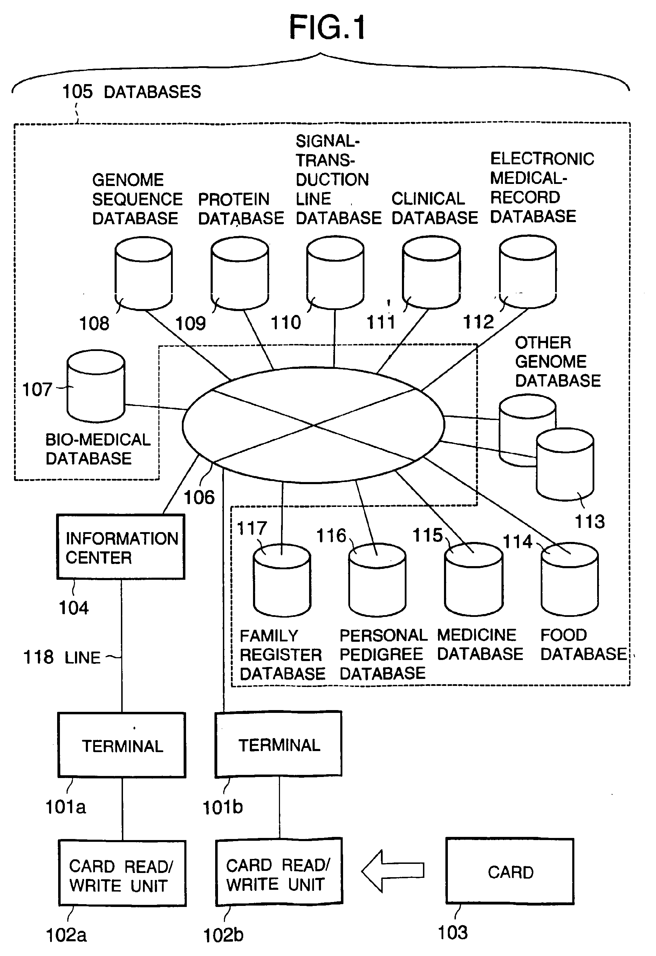

When a user intends to obtain information by using the storage medium 504 and the ID code 505, the user puts the storage medium 504 and the ID code 505 in the terminal 101a or the terminal 101b, or the card read/write unit 102a or the card read/write unit 102b, which are shown in Fig. 1. Alternatively, the ID information described on the ID code 505 may be input in the terminal 101a or 101b. The terminal 101a reads out the data address for information reference, which is recorded in the storage medium 504, and accesses to the network 106, which is connected to the terminal 101a via the information center 104, or the group of databases 105 connected to the network 106 to make an inquiry. For example, when a user intends to obtain information concerning a primer for amplifying a gene related to a specified disease, he refers to the bio-medical database 107, in which information related to locus, manifestation, and mutation of the gene related to the disease is stored, the clinical database 111, in which clinical information of the disease is stored, the medicine database 115, in which information of medicines used for treatment is stored. These pieces of information are displayed on the terminal 101a to be outputted so as to be used by the user. The displayed and outputted information may be information stored in the information center 104, or may be information stored in the group of databases 105 connected to the network 106. In a case of the terminal 101b, bypassing the information center 104, the user accesses to the group of databases 105 via the network 106. In this case, pieces of information necessary for inquires to the group of databases 105 are stored in the storage medium 504 and the ID code 505. In addition, regardless of whether or not access is by way of the information center 104, the storage medium 104 may include an information-processing software offering useful information to a user by integrating a variety of information from the group of databases 105 in the terminal 101a or 101b. Furthermore, information transmitted from the group of databases 105 to the terminal 101a or 101b may be stored in the card 103 including a storage unit such as a magnetic storage unit, a semiconducting storage unit, a photo storage unit, or a phase-change storage unit. Naturally, the information obtained from the databases 105 is not necessarily stored in the card 103, and may be stored in a storage unit disposed in the terminal 101a or 101b.

The group of databases 105 shown in Fig. 1 includes, for examples, the bio-medical database 107, the genome sequence database 108, the protein database 109, the signal-transmission line database 110, the clinical database 111, the electronic medical-record database 112, the other-genome database 113, the food database 114, the medicine database 115, the personal pedigree database 116, and the family register database 117. However, other various databases may be used in the present invention. Reference database to be used is determined by the characteristics of a bio-product and the purpose of the individual who uses the product.

Meanwhile, when a user who has a medicine as a bio-product has a desire to know about the safety of the product, reference databases can be used as follows.

First, the user refers to the medicine database 115 to know about the components of the medicine, and refers to the clinical database 111 to know about the effects of the medicine on patients, the result of treatments obtained by using the medicine, the occurrence of side effects, and the validity of combinations between the medicine and other medicines. Then, the user refers to the electronic medical-record database 112 to know about whether or not the medicine is appropriate for treatment by examining the clinical history of a patient who takes the medicine, and refers to the personal pedigree database 116 to know about whether the medicine is effective or not against a heredofamilial disease. If necessary, the user refers to other databases. The pieces of information obtained in the above process are stored temporarily in the terminal 101a or the terminal 101b before the user applies them.

Management of the databases 105, such as updating and maintenance of information, is usually conducted by agencies as providers of the individual databases, and the information newest at a time when access for an inquiry from the user is permitted can be provided. Accordingly, the user who intends to obtain necessary information from the databases 105 can gain the latest bio-product information and quality-guarantee information of the bio-product at that point in time.

As described above, in the method of delivering the latest bio-product information to a user described in the first embodiment, the address information of reference databases stored in the information described on paper 503, the information storage medium 504, or the ID code 505 is provided with the bio-product, and the databases 105 as the reference databases are connected to the terminal 101a or the terminal 101b by way of the network 106, and also by way of the information center 104 if necessary.

Regarding updating of bio-product information, besides the method of updating information under a request from the user of a bio-product, there is a method of automatically transmitting updated information to the users of the bio-product from the information management agencies. In this case, the code of the bio-product is stored in the information center 104 to conduct the management of the bio-product information. Also, concerning the transmission of updated information, it is helpful to store information of the purchasers and users of the product if necessary.

Specifically, since the dispositions of users can be clarified if the SNPs is stored as user information, more efficient delivery of the bio-product information can be achieved. When the information center stores the bio-product information and refer to the databases at every certain period of time to check updating of the information, the information center can obtain the latest information to conduct information management. Therefore, when the updated information is delivered to the user of the product by the information center, the user can use the product by referring to the latest information related to the product. Furthermore, instead of simply delivering the updated information, when the updated information is combined with other information to be delivered, more beneficial information delivery is possible. For example, with the combination of the information concerning the SNP of a user and the information of the effective components of a medicine, it is possible to assume whether the medicine is effective or not to the user by referring to the information concerning the SNP of the user. Furthermore, with such information processing performed by the information center, the capacity of the information storage medium can be reduced, and the performance of the information-processing unit can be minimized, with the result that the terminal can have simpler structures. Additionally, when the system for transmitting the updated information to the terminal from the information center is a wireless system, it is possible to obtain a terminal having a small or thin structure like a chip or film having a wireless transmission function with a display unit. Moreover, as described above, with bio-product information management conducted by the information center, it is possible to offer the automatic delivery service of the updated information concerning a bio-product from the information management side to the user of the product.

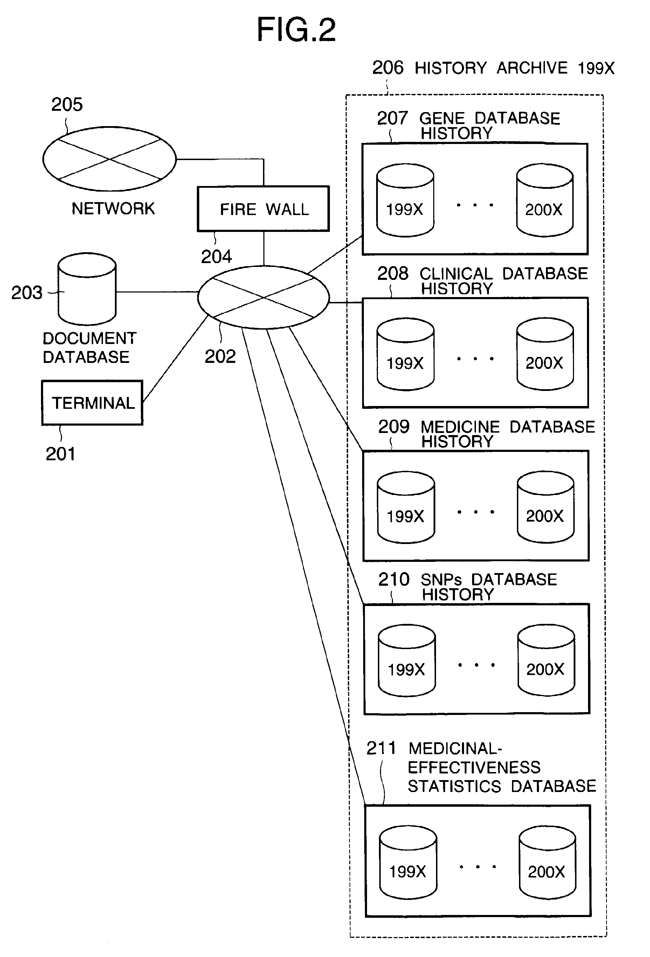

Fig. 2 illustrates a second embodiment of the present invention. As described in the first embodiment, regarding the bio-product information and quality-guarantee information of a bio-product, the latest information thereof must be always provided to the user of the product by updating the information. However, for example, there may be some users who want to know about how the quality of the bio-product was guaranteed in the past, such as when the product was designed, produced, and was provided to the user. Thus, in order to respond to such a request, the history archive 206 is prepared. The history archive 206 has a structure comprising a plurality of databases including the same kind of information as that stored in the databases 105 shown in Fig. 1. For example, the gene database history 207 includes databases having from the past gene information to the most recent gene information. The gene database history 207 may be a database storing a plurality of databases, or may be a single database storing updated contents. This is also the same as in the cases of the other databases such as the clinical database history 208, the medicine database history 209, the SNPs database history 210, and the medicinal-effectiveness statistics database 211. In addition to these databases, the history archive 206 may also include databases having different information, as seen in the databases 105 shown in Fig. 1. As an alternative to the structure shown in Fig. 2, the history archive 206 may be included in the databases 105 or in the information center 104, as shown in Fig. 1. Furthermore, regarding the information stored in the history archive 206, every time the information is updated, the overall old databases may be stored in the history archive 206, or only the updated information may be contained therein. When the amount of the updated information significantly excels over the amount of information stored in the databases, it is simpler to contain the overall old databases in the history archive 206 than to contain only the updated information therein.

As described above, with the history archive 206, it is possible to obtain not only the latest information but also bio-product information in the past from the databases 105. Referring to the history archive 206, it is possible to obtain the bio-product information as information present at an arbitrary point in time.

In Fig. 1, regarding the line 118 connecting the information center 104 and the terminal 101a, it is possible to use either a wire system or a wireless system. In a case of the wireless system used for the line 118, a wireless interface for wireless transmission/reception is disposed both in the information center 104 and the terminal 101a. At least one of the terminals 101a and 101b may be a multi-purpose information apparatus such as a personal computer, or may be a terminal exclusively used for obtaining bio-product information. Alternatively, one of the terminals 101a and 101b may be a terminal incorporated in an apparatus utilizing a bio-product or an apparatus used for handling the bio-product, such as a PCR apparatus or an X-ray analysis apparatus.

In one of the first and second embodiments, a target site for making information reference is not restricted to the databases only storing data. As an alternative to the databases, there may be provided a service site for performing information processing such as a homology search with respect to the stored data. Usually, a homology search is performed to examine the level of similarities or homologies between the stored information and the data of DNA base sequence information, the data of protein amino acid sequence information, etc. Therefore, in order to compare the information stored in the databases with the aforementioned information, when the search of examining similarities and homologies between the information of the databases and the data of the above-described information is conducted in addition to the identity search of whether the information of the databases coincides with the data, a higher level search like a homology search can be included in the application of the present invention. In the future, if sites offering bio-informatics service are on the increase, the present invention can provide a new method of delivering information, which includes information processing and modifications. The bio-informatics service may be combined with databases or may be a service site performing information processing on its own. Alternatively, the information center 104 may offer the bio-informatics service.

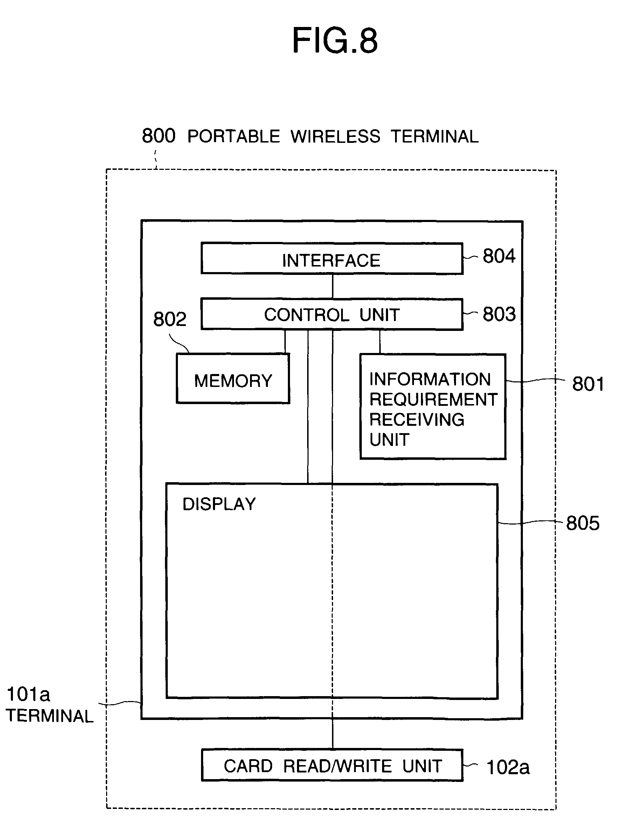

As a third embodiment, referring to Fig. 8, a description will be given of a case in which the terminal 101a is a compact terminal for obtaining information by a wireless transmission/reception system. The compact wireless terminal 800 comprises at least the information requirement receiving unit 801, the wireless interface 804 for performing the wireless transmission/reception of a information-obtaining requirement or obtained information, the display 805 for displaying the requirement or the obtained information, the control unit 803 for controlling the requirement and the obtained information, and a memory 802.

The information-obtaining requirement may be performed by using personal information of a user. Individual information can be efficiently provided according to the predisposition of each person, when bio-product information is obtained based on the information concerning individual SNPs. The personal information may be stored in a memory unit installed in the terminal 101a, or may be stored in a memory unit installed in the card 103 to be read/written by the card read/write unit 102a.

In addition, when the terminal 800 is formed into a thin-type card, the compact wireless terminal 800 can be directly and conveniently attached to the container of a bio-product. As a result, without the need for a personal computer and other devices, the user can obtain bio-product information and the quality-guarantee information of the product on the display 805 of the compact wireless terminal 800.

The compact wireless terminal 800 also includes a power-supply unit, although this is not shown in Fig. 8. The power-supply unit may be a battery or may be any other power generation mechanism in which the reception of electric waves generates electrical power.

The display 805 can display a variety of organism information and organic-origin information including information related to the effects and dose of a medicine and the SNPs information of users who need to be cautious about the dosage of the medicine. Any information can be shown on the display 805, such as information stored in the databases 105, information stored in the history archive 206, information processed in the information center 104, information processed by the control unit 803 disposed in the compact wireless terminal 800, and information stored in the card 103.

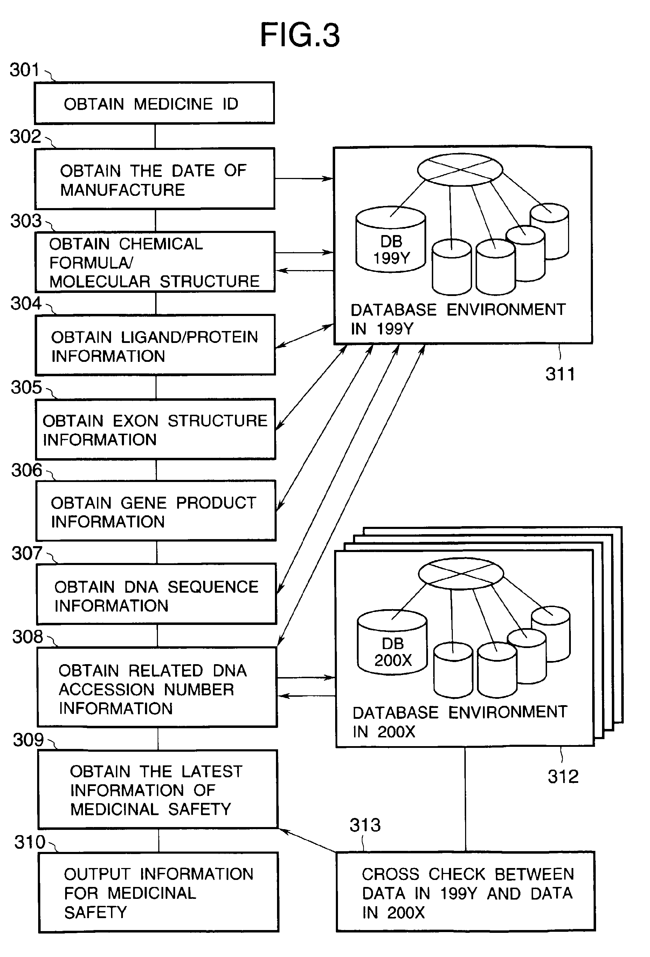

Fig. 3 shows an example of the process for obtaining the information of a medicine as a bio-product by using an ID number. The ID number assigned to the medicine is inputted to a terminal to obtain the date of manufacturing from the ID number (step 302). In step 302 conducted to obtain the date of manufacturing the bio-product, the information center 104 may search the date with reference to the ID number. Next, the chemical formulas or molecular structures of substances contained in the medicine are obtained from the ID number (step 303). In this step, the history archive 206 may be referred to. In the next step 304, ligand/protein information is obtained, and then, in STEP 305, exon structure information is obtained. In step 306, gene product information is obtained, and DNA sequence information is obtained in STEP 307. Related DNA accession number information is obtained in step 308. From step 304 to step 308, the history archive 206 may be referred to when necessary. In addition, in step 308, as the latest database, for example, any database of the databases 105 may be referred to. In step 313, cross check between data in 199Y as the date of manufacture and data in 200X as the date of use is conducted to examine whether the medicinal safety information is required to be changed or not according to updated information, and the result is outputted. In step 309, the latest medicinal safety information is gained from the information obtained in steps 303 through 308 and 313. In step 310, the obtained safety information is outputted.

With this arrangement, when a medicine manufactured in the year of 199Y is used in the year of 200X, the medicine can be used based on the latest information in the year of 200X.

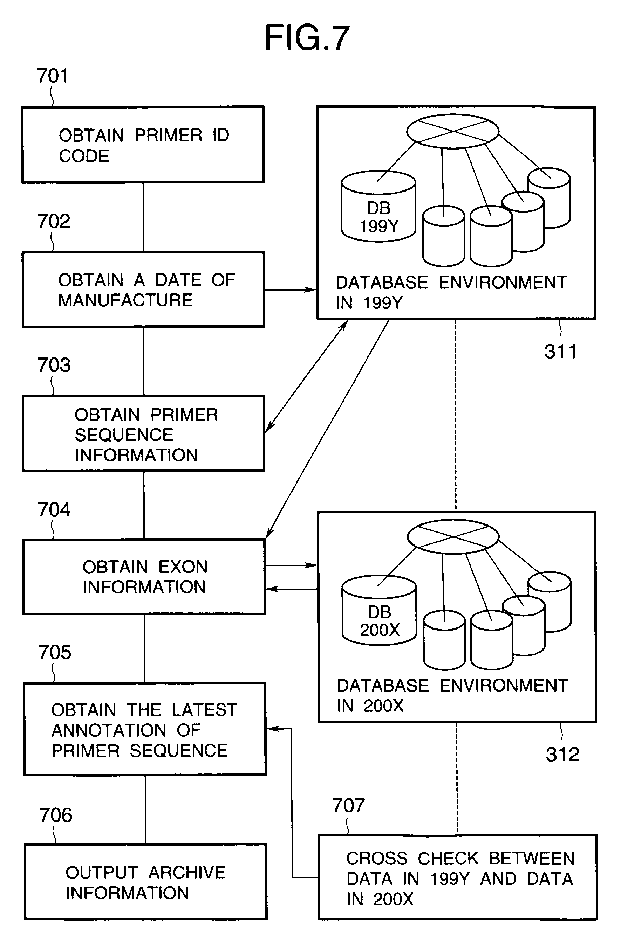

Fig. 7 shows an example of the process of obtaining bio-product information by using an ID code when the bio-product is a primer.

In this procedure, first, an ID code assigned to the primer is inputted to a terminal, and then 199Y as the year of manufacturing is obtained from the inputted ID code (step 702). Next, primer oligonucleotide sequence information is obtained from the ID code (step703). In step 704, exon information is obtained. In steps 702 through 704, those pieces of information may be obtained from the ID code by referring to the information center or the history archive 311. In step 705, the latest annotation of the primer oligonucleotide sequence information is obtained, and in step 707, whether the obtained information both in the year of 199Y and the year of 200X is updated or not is examined, and the result is outputted. In steps 704 and 705, information may be obtained from the ID code by referring to the information center or any of the databases 105. In step 706, information updating and changes between the year of 199Y in which the primer was manufactured and the year of 200X at the present year are exhibited.

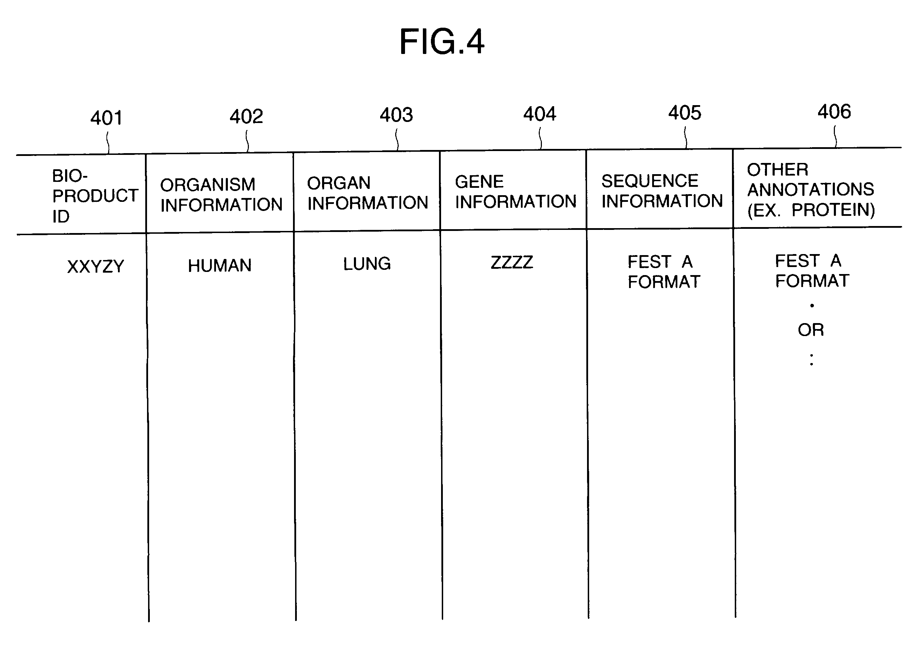

Fig. 4 shows an example of a data form used when organism information or organic-origin information is provided to users. In this figure, there are shown an ID number 401, organic species information 402, an organ 402, a gene 404, sequence information 405, and other annotation/protein information 406. However, items applicable in the present invention are not restricted to the items 401 to 406. Addition and elimination of items may be possible when necessary. Information provided or obtained must satisfy the requirements of users. In addition, in the same item, the content or information thereof can change with time. Therefore, time information may also be added to show how information changes with time. If necessary, besides data described by letters with symbols, graphic data such as charts of molecular structures may be added.

Fig. 6 shows an example of how to connect databases. The center 603 can be considered to have the same structure as that of the information center 104 shown in Fig. 1. Although the terminal 601 is connected to the network 602 in Fig. 6, the terminal 601 may be connected to the network 602 via the center 603. The group of databases 604 to 606 may be equivalent to the databases 105 or may be present as a single database such as the history archive 206. The in-house database 607 is a database connected to the center 603, which imposes restrictions on the database 607 in terms of access or information obtaining requirement from the network 602. When the connection to the database 608 and the database 609 of individual users from the network 602 are cut off, important personal information can be safely stored in the databases 607 to 609.

As the third embodiment of the invention, a more detailed description will be given of an information delivery system for selling the primer set as a bio-product. First, a conventional gene analysis method using the PCR method will be described below.

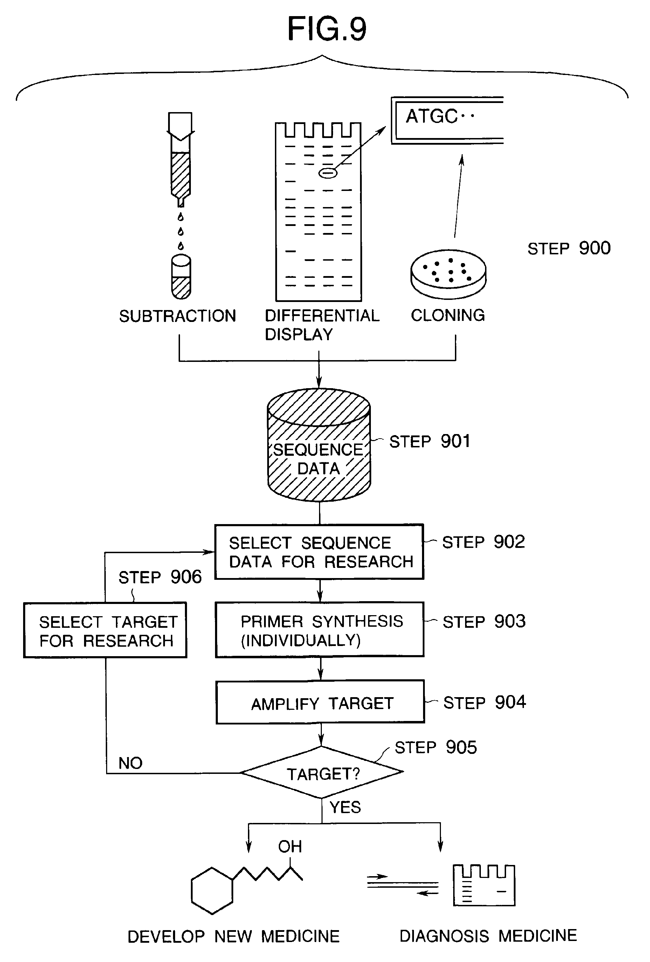

Fig. 9 shows an example of the conventional gene analysis method.

In the conventional gene analysis method, with an individual gene and a protein of interests set as targets to be examined, cloning and identification of the base sequence of the gene and the amino-acid sequence of the protein are performed by subtraction and the differential display method (step 900) so as to examine the functions of the gene and the protein. For example, an exon, which seems to serve the purpose of the study, is first selected from the identified base sequence (step 902), and a primer corresponding to the selected exon is designed (step 903). With the use of the primer, a targeted exon is amplified by the polymerase chain reaction (PCR) method (step 904), and the amplified exon is analyzed (step 905). The PCR method is a method in which a primer is designed at both edges of a target region for amplification and a gene is amplified in a logarithmic-functional manner under a temperature cycling condition by using a heat-resistant DNA enzyme such as Taq DNA polymerase. A primer is referred to as oligonucleotide having -OH at three ends necessary to start a DNA synthesis.

In such a conventional gene analysis method, when the exon selected is found not to serve the purpose of the study by the analysis performed in step 905, it is necessary to repeat the process by restarting from the selection of an exon in step 902 (step 906). With the repeating of the process, it is essential to accurately select an exon serving the purpose of the study, although it is never an easy thing to do that. For example, in an attempt to analyze the difference in genes between a patient with a certain disease such as cancer and a healthy person, an exon targeted for the purpose of the analysis is an exon causing the disease. However, it is extremely difficult to accurately determine which exon is an exon to be targeted for the analysis. As a result, there is no other better way to reach the goal than keeping trying to analyze every prospective exon, as described above.

Meanwhile, in a patent application filed by the inventors of the present invention, there is provided a set of multiple kinds of primers, which serve to amplify many different kinds of exons that are expected to have certain functions by using the PCR method. In terms of delivery of such a set of primers to users, as already described above, the pieces of information concerning each primer, for example, which DNA each primer is originated from, which gene in the DNA the primers are related to, how the primers function, and whether or not the primers have any functions, are delivered to the purchaser of the primer set by using the information described on paper 503, the information storage medium 504, the ID code 505 recording ID codes, etc.

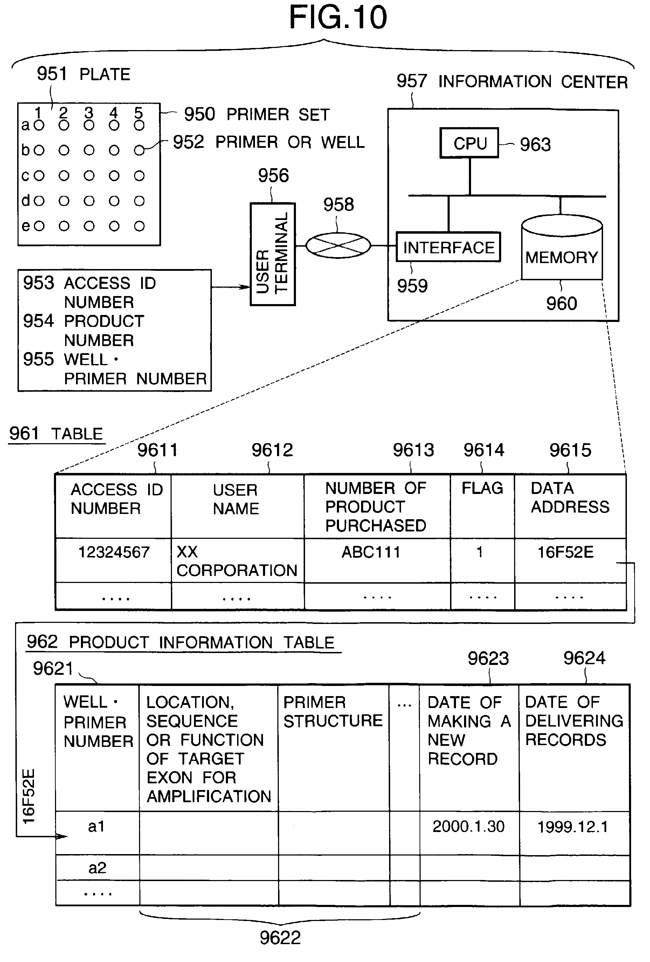

Referring now to Fig. 10, as another embodiment of the present invention, a description will be given of an example in which the right to access to an information center having information concerning a primer set is given to the purchaser of a primer set so as to deliver related information.

In Fig. 10, a primer set 950 has a structure in which a plurality of primers 952 is disposed on a plate 951 in a two-dimensional manner. When wells are in advance formed in the plate 951 so that solutions can be put therein, the primers are put in the wells 952. A product number 954 is attached on the plate 951, and the primers 952 on the plate 951 are numbered. In this embodiment, a well'primer number 955 is represented by combinations of the column numbers of 1 to 5 and the row symbols of "a" to "e" given to the wells on the plate 951, such as a1 and b3.

A person who purchased the above primer set 950 can obtain the right to access to an information center 957 storing primer information. The right to access is equivalent to an access ID number 953, which enables the purchaser of the primer set to be accessible to the data of the information center 957 when he accesses to the information center 957. A seller of the primer set sends information concerning the purchaser of the primer set and the product number of the primer set to the information center 957. When the purchaser intends to obtain the primer information, he accesses to the information center 957 via a terminal 956, which can be connected to a network 958. With the information sent from the seller, the information center 957 makes a table 961 in which the access ID number is linked with the information concerning the primer set and the purchaser or the user thereof to conduct table management. The information center 957 comprises an interface 959 for inputting/outputting information between the information center and the outside, a memory 960 storing primer-set information, and a CPU 963 controlling information processing in the information center 957. When the user accesses to the information center 957 via his terminal 956, the information center 957 asks the user for his access ID number. In response to this, the user inputs his access ID number 953. Then, the information center 957 confirms that the access ID number 953 obtained by the control of the CPU 963 is registered in the table 961 stored in the memory 960, and gives the permission of access to the primer information stored in the memory 960 only to the user registered in the user table 961. After this, the information center 957 informs to the registered user that his access to the data is permitted, and waits for the user to input next information. The user makes sure that his access to the information center 957 is permitted, and inputs the product number 954 of the primer set that he purchased. After the information center 957 receives the input of the product number 954 from the user, a product information table 962 of a product specified by the product number 954 inputted by the user is referred to. When the user inputs the well primer number 955, the information center 957 obtains information linked to the well primer number 955 from the product information table 962 to send back to the terminal of the user.

The table 961 stored in the memory 960 includes the name of a user 9612 linked to an access ID number 9611, the purchased-product number 9613, a flag 9614 for indicating the presence of the latest information, which is yet to be delivered, concerning the purchased-product number 9613, and data address 9615 indicating the location of the information concerning the purchased product 9613. The product information table 962 is compiled for each product number 9613, and the data address 9615 indicates where each product information is stored. In the product information table 962 linked to each product number in the embodiment, the well primer number 9621 of each product, information 9622 concerning the location, sequence, and function of target exon amplified by a primer set at the well primer number 9621 and the structure of the primer, the records 9623 of updating of the above information, and the records 9624 of delivery to users are included. In the information 9622, when the analysis of the function of the exon targeted for amplification is already completed, the determined function information is stored. When the analysis thereof is yet to be made, the information concerning prospective functions and conditions related to the functions are stored. Furthermore, in addition to this, the information 9622 includes information concerning the location of an exon targeted for amplification on a chromosome, information concerning a gene family having similar sequences, information concerning the gene groups of other organic species having similar sequences, expression information concerning EST and SAGE having similar sequences, information of gene functions presumed from genes having similar sequences, the latest document information, etc., although these pieces of information are not shown in the figure.

The CPU 963 allows the flag 9614 of the table 961 to be set, when the updating-related record 9623 is newer than the delivery record 9623. When an additional flag (not shown) is set to indicate that the user desires the automatic delivery of updated information, in response to the flag 9614, the CPU 963 automatically delivers the updated information to the user, after the information of the product information table 962 is updated. Even when the CPU 963 does not perform the automatic delivery of the updated information, when the CPU 963 receives an inquiry about product information from the user having a registered access ID number, after confirmation of the set flag 9614, the CPU 963 delivers updated information concerning the purchased-product number to the user. Depending on the requirement and setting, only updated information concerning the well primer number may be delivered to the user. In terms of setting, when the user accesses to the information center, he can sign up for a preferable service according to his convenience.

When the user asks for information regardless of the presence of updating, the CPU 963 transmits information concerning the primer set purchased by the user to the user, without the need for confirming the flag 9614.

For example, as the updated information, there is provided the information concerning the function of the exon as a target for amplification described above. With the advanced DNA analysis, new findings and analytical results of interest are available on daily bases. Therefore, even if the function of a target exon amplified by a primer contained in a primer set is unknown when the primer set is sold, the function information can be updated by the results of later examinations for clarifying the function of the exon.

The method of delivering primer information described in the above embodiments will be shown in the following structures.

First, in a method of delivering primer information wherein there are provided a primer set including a plate and a plurality of kinds of primers placed on the plate, and an information center storing primer information concerning the primer set, a seller of the primer set sells the primer set and the right to access to the information center to a purchaser, and gives the information center information concerning the purchaser of the primer set and the right to access. The information center stores the given information in such a manner that the primer information stored in the information center is linked to the information concerning the purchaser and the right to access, and the purchaser accesses to the information center based on the right to access via an external terminal, whereby the primer information linked to the right to access is delivered to the purchaser.

In addition, another structure of the method of delivering primer information comprises the steps of purchasing both a primer set including a plate and a plurality of kinds of primers placed on the plate and the right to access to an information center storing primer information concerning the primer set, and accessing to the information center from an information terminal via a network, whereby the primer information is delivered to the information terminal on condition that the access is based on the right to access.

In the above method of delivering primer information, the primer information may be information concerning the function of an exon amplified by the primer.

Furthermore, there is provided another structure of the method of delivering primer information, in which the primer is used for amplifying an exon of a DNA, the method comprising the steps of preparing a memory for storing the data of a user having a primer, the information of the function of an exon amplified by the primer, and updating-related information showing updating of the function information, and controlling the memory such that the updating of the function information is reported to a site specified by the user data or the function information is delivered thereto, when the updating-related information shows the updating of the function information.

According to the present invention, organism-related information is updated with time ever after delivering of a bio-product, and is stored efficiently so that the latest information is available to a user of the bio-product. When the user uses the bio-product, he can refer to updated information regarding the effects, efficacy, and safety of the bio-product. As a result, the user himself can confirm the quality of the bio-product for the appropriate use thereof.

When the bio-product is provided to the user, he automatically obtains the right to access to an information center storing product information concerning the bio-product. With the use of the right to access, the user can easily obtain the information concerning the bio-product, which is organized in advance. When the product information is updated, the updated information is automatically transmitted to the user from the information center so that the user can always reach the latest information concerning the product. With the delivery of the latest information, the analysis of gene function can be soon informed. Accordingly, with no need for analysis, it is possible to obtain the function information concerning an exon that was expected to be amplified for analysis. Since this can exclude wasteful repetitive processes in gene analysis, efficiency in the process of research and development can be enhanced. Furthermore, based on the previously analyzed result, further study and analysis can be newly started, with the result that the present invention can substantially contribute to the rapid progress of the overall bio-industry including gene study, gene business.

In addition, while the preferred embodiments have been described, it will be understood by those skilled in the art that various modifications may be made therein within the scope of the invention and the appended claims.

## Claims

1. A method of delivering bio-product information, comprising the steps of:
storing the code of a bio-product, a first information concerning said bio-product, a second information concerning said bio-product, a linkage data between said code of the bio-product and said first information, a linkage data between said code of the bio-product and said second information, and an address for referring to a database storing information which belongs to the same category as that of said first information;
obtaining a third information from said database based on said address for referring to said database;
storing said third information;
combining said second information with said third information to produce a fourth information; and
transmitting a pair of said code of the bio-product and said fourth information to a line;
wherein said third information is equivalent to said first information updated by modifications, eliminations, or additions.

2. A method of delivering bio-product information according to claim 1, wherein said first information is information concerning a protein contained in said bio-product or information concerning a DNA contained in said bio-product;
said second information is biological information concerning users of said bio-product information or objects targeted for using said bio-product information;
said fourth information is obtained by combining information concerning the protein contained in said bio-product or information concerning the DNA contained in said bio-product with said biological information concerning said users or said targeted objects, and is information concerning effects obtained when said users use said bio-product or effects obtained when said bio-product is used for said targeted objects.

3. A method of delivering bio-product information, comprising the steps of:
storing the code of a bio-product, a first information concerning said bio-product, a second information concerning said bio-product, a linkage data between said code of the bio-product and said first information, a linkage data between said code of the bio-product and said second information, and an address for referring to a database storing information which belongs to the same category as that of said first information;
combining said first information with said second information to produce a third information;
storing said third information;
transmitting a pair of said third information and said code of the bio-product to a line;
obtaining a fourth information from said database based on said address for referring to said database;
combining said second information with said fourth information to produce a fifth information;
storing said fifth information; and
transmitting a pair of said fifth information and said code of the bio-product to said line;
wherein said fourth information is equivalent to said first information updated by modifications, eliminations, or additions.

4. A method of delivering bio-product information, comprising the steps of:
storing the code of a bio-product, a first information concerning said bio-product, a second information concerning said bio-product, a linkage data between said code of the bio-product and said first information, a linkage data between said code of the bio-product and said second information, and an address for referring to a first database storing information which belongs to the same category as that of said first information, and an address for referring to a second database storing information which belongs to the same category as that of said second information;
obtaining a third information from said first database based on said address for referring to said first database;
storing said third information;
obtaining a fourth information from said second database based on said address for referring to said second database;
storing said fourth information;
combining said third information with said fourth information to produce a fifth information; and
transmitting said fifth information to a line;
wherein said third information is equivalent to said first information updated by modifications, eliminations, or additions; and said fourth information is equivalent to said second information updated by modifications, eliminations, or additions.

5. A method of delivering bio-product information according to claim 3, wherein said fourth information is information concerning the quality guarantee of said bio-product.

6. A method of delivering bio-product information, comprising the steps of:
receiving a request for delivering the code of a bio-product and information concerning said bio-product;
referring to a first information and a second information linked to said code of the bio-product;
combining said first information with said second information to produce a third information; and
transmitting said third information to a line.

7. A method of delivering bio-product information, comprising the steps of:
receiving a request for delivering the code of a bio-product and information concerning said bio-product;
obtaining a first information linked to said code of the bio-product and a second information linked to said code of the bio-product;
combining said first information with said second information to produce a third information; and
transmitting said third information to a line;
wherein said first information or said second information is obtained from a database.

8. A method of delivering bio-product information according to claim 7, wherein said first information or said second information is the latest information obtained from said database.

9. A method of delivering bio-product information according to claim 7, wherein said database is a history archive storing information and a record of updating including modifications, additions, and/or eliminations performed on said information in the past; and said first information or said second information is information on which the updating was performed.

10. A method of delivering bio-product information, comprising the steps of:
receiving a request for delivering the code of a bio-product, DNA-related information, and said bio-product information;
obtaining a first information linked to said code of the bio-product;
combining said DNA-related information with said first information to produce a second information; and
outputting said second information or transmitting said second information to a line.

11. A method of delivering bio-product information according to claim 1 , wherein said line is wireless.

12. A method of delivering bio-product information according to claim 10, wherein said DNA-related information is one of cDNA-related information, information concerning single nucleotide polymorphism, information concerning human DNA base sequence, and information concerning human gene mutation.

13. A method of delivering primer information, comprising the steps of:
preparing a storage medium having recorded thereon ID codes given to each primer, said codes being written on a plate having a plurality of primers placed thereon;
reading said ID codes recorded in said storage medium by an information terminal;
displaying said read ID codes by said information terminal;
receiving the selection of said ID code by said information terminal; and
obtaining information concerning a target gene to be amplified by the primer linked to said ID code from a database connected to said information terminal via a network based on said ID code by said information terminal.

14. A method of delivering primer information comprising the steps of:
preparing a storage medium having recorded thereon a plurality of ID codes given to each primer, said codes being written on a plate having a plurality of the primers placed thereon;
reading said plurality of ID codes by an information terminal;
displaying said read plurality of ID codes by said information terminal;
selecting at least one of said displayed plurality of ID codes;
transmitting a request for obtaining information concerning a target gene to be amplified by the primer linked to said selected ID code to a database connected to said information terminal via a network from said information terminal based on said selected ID code;
receiving said information concerning the gene from said database by said information terminal; and
displaying said received information concerning the gene by said information terminal.

15. A method of delivering primer information wherein there are provided a primer set including a plate and a plurality of kinds of primers placed on said plate, and an information center storing primer information concerning said primer set, the method comprising the steps of:
a seller of said primer set selling said primer set and the right to access to said information center to a purchaser;
said seller giving information concerning said purchaser of said primer set and said right to access to said information center;
said information center storing the given information in such a manner that the primer information stored in said information center is linked to the information concerning said purchaser and said right to access; and
said purchaser accessing to said information center based on said right to access via an external terminal;
whereby said primer information linked to said right to access is delivered to said purchaser.

16. A method of delivering primer information comprising the steps of:
a primer information is delivered to a information terminal on condition that an accessing is based on the right to access, when a purchaser purchasing a primer set including a plate and a plurality of kinds of primers placed thereon and said right to access to an information center storing primer information concerning said primer set; and accessing to said information center from said information terminal via a network.

17. A method of delivering primer information according to claim 16, wherein said primer information is information concerning the function of an exon amplified by said primer.

18. A method of delivering information concerning a primer used for amplification of an exon of a DNA, comprising the steps of:
preparing a memory for storing the data of users having a primer, the information concerning the function of an exon amplified by said primer, and updating-related information showing updating of said function information; and
controlling said memory such that said updating of said function information is reported to a site specified by said user data or said function information is delivered thereto, when said updating-related information shows said updating of said function information.

19. A computer program comprising program code means for performing the method of any one of the preceding claims.

20. Primer or bio-product information delivered according to the method of any one of claims 1 to 18.
